# DEMANDE DE BREVET EUROPEEN

(11) **EP 4 825 707 A1**
(43) Date de publication de la demande: **21.10.2026**
(21) Numéro de dépôt: 26172521.2
(22) Date de dépôt: 15.04.2026
(51) Int. Cl.: B62D 25/08, B62D 25/16

(54) **STRUCTURE AVANT D'UN VÉHICULE AUTOMOBILE**

(30) Priorité: 16.04.2025 FR 2504084
(71) Demandeur: Flexis, 92100 Boulogne Billancourt (FR)
(72) Inventeur: GUERCIO, Roberto, 78280 GUYANCOURT (FR)
(74) Mandataire: Lavoix

(57) **Abrégé**

L'invention concerne une structure avant (10) de véhicule automobile, comportant : un pare-brise (12) ; un panneau d'auvent (14), s'étendant le long d'un bord inférieur (24) du pare-brise ; et un agencement latéral (16) comprenant :
- un montant (34), fixé à une extrémité (20) du pare-brise ;
- une aile (36), s'étendant vers l'arrière depuis le montant ; et
- un feu de jour (38), comprenant une façade (44).

L'agencement latéral comporte en outre une pièce d'habillage (40), comprenant :
- un bord arrière (50) ;
- une portion frontale (52), s'étendant depuis une première partie (60) du bord arrière jusqu'à la façade (44) du feu de jour ;
- une portion latérale (54), de forme incurvée, formant une surface continue avec l'aile (36) ;
et
- une portion de protection (56), inclinée par rapport à la portion latérale (54).

## Description

La présente invention concerne une structure avant de véhicule automobile, du type comportant : un pare-brise, destiné à former une surface avant du véhicule selon une direction de déplacement dudit véhicule, le pare-brise s'étendant dans une direction transversale du véhicule, entre une première et une seconde extrémités, le pare-brise s'étendant sensiblement verticalement entre un bord inférieur et un bord supérieur ; un panneau d'auvent, s'étendant selon la direction transversale le long du bord inférieur du pare-brise, entre une première et une seconde extrémités ; et un premier agencement latéral ; le premier agencement latéral comportant : un montant, fixé à la première extrémité du pare-brise et s'étendant sensiblement verticalement, entre une extrémité inférieure et une extrémité supérieure ; une aile, s'étendant sensiblement vers l'arrière selon la direction de déplacement, depuis l'extrémité inférieure du montant ; et un feu de jour, sensiblement aligné selon la direction de déplacement avec la première extrémité du panneau d'auvent, ledit feu de jour étant disposé en avant par rapport audit panneau d'auvent ; le feu de jour comprenant une façade, ladite façade comprenant un bord supérieur s'étendant sensiblement horizontalement.

Dans la plupart des véhicules connus, un capot s'étend entre le pare-brise et les feux avant du véhicule et un espace latéral est ménagé entre le panneau d'auvent et chaque aile du véhicule. Un tel espace latéral est généralement dissimulé par une pièce supplémentaire, disposée entre le capot et l'aile correspondante. Une telle pièce est en général de petites dimensions et difficile à relier solidement à la structure du véhicule. Une telle pièce peut ainsi être facilement dégradée ou volée, ce qui expose une partie l'équipement interne du véhicule.

Le but de l'invention est de proposer une structure avant améliorée, en particulier adaptée à une très faible distance entre le pare-brise et les feux avant du véhicule, notamment les feux de jour.

A cet effet, l'invention a pour objet une structure avant du type précité, dans laquelle le premier agencement latéral comporte en outre une pièce d'habillage, ladite pièce d'habillage comprenant : un bord arrière, comprenant une première et une deuxième parties dans le prolongement l'une de l'autre ; la deuxième partie présentant une forme incurvée ; une portion frontale, sensiblement plane, s'étendant dans la direction de déplacement depuis la première partie du bord arrière jusqu'au bord supérieur de la façade du feu de jour ; une portion latérale, formée d'une pièce avec la portion frontale ; ladite portion latérale étant de forme incurvée, s'étendant depuis la deuxième partie du bord arrière et formant une surface continue avec l'aile ; et une portion de protection, formée d'une pièce avec la portion latérale et inclinée par rapport à ladite portion latérale, ladite portion de protection s'étendant sensiblement vers le bas à partir de la deuxième partie du bord arrière, jusqu'à un bord libre disposé en vis-à-vis du pare-brise.

Suivant d'autres aspects avantageux de l'invention, la structure avant comporte l'une ou plusieurs des caractéristiques suivantes, prises isolément ou suivant toutes les combinaisons techniquement possibles :
- la portion de protection forme une surface incurvée présentant une concavité orientée vers le bord supérieur du pare-brise ;
- une première distance entre le pare-brise et le bord libre de la portion de protection est inférieure à une deuxième distance entre le pare-brise et la première partie du bord arrière de la pièce d'habillage ;
- la structure avant comprend une cavité avant, ménagée entre le pare-brise et le panneau d'auvent d'une part, et la pièce d'habillage du premier agencement latéral d'autre part ; et la première partie du bord arrière de la pièce d'habillage est un bord libre, bordant ladite cavité avant ;
- le feu de jour du premier agencement latéral comporte un boîtier fixé à la façade et disposé en arrière de ladite façade, ledit boîtier étant disposé sous la portion frontale de la pièce d'habillage et dans la cavité avant ;
- le panneau d'auvent comprend un premier orifice d'articulation, disposé proche de la première extrémité dudit panneau d'auvent ; le premier orifice d'articulation est disposé dans la cavité avant ; et la structure avant comprend en outre un essuie-glace, assemblé au premier orifice d'articulation ;
- la structure avant comprend en outre une pièce centrale d'habillage, prolongeant la pièce d'habillage du premier agencement latéral dans la direction transversale, la cavité avant s'étendant également entre le pare-brise et le panneau d'auvent d'une part, et la pièce centrale d'habillage d'autre part ;
- le panneau d'auvent comprend une rigole, disposée dans la cavité avant, ouverte vers le haut et s'étendant dans la direction transversale ;
- la structure avant comprend en outre un second agencement latéral, sensiblement symétrique du premier agencement latéral par rapport à un plan médian de la structure avant.

L'invention se rapporte en outre à un véhicule automobile, comprenant une structure avant telle que décrite ci-dessus.

L'invention apparaîtra plus clairement à la lecture de la description qui va suivre, donnée uniquement à titre d'exemple non limitatif, et faite en référence aux dessins dans lesquels :
- la figure 1 est une vue en perspective d'une structure avant selon un mode de réalisation de l'invention ;
- la figure 2 est une vue partielle de la structure avant de la figure 1 ; et
- la figure 3 est une vue en coupe de la structure avant des figures 1 et 2.

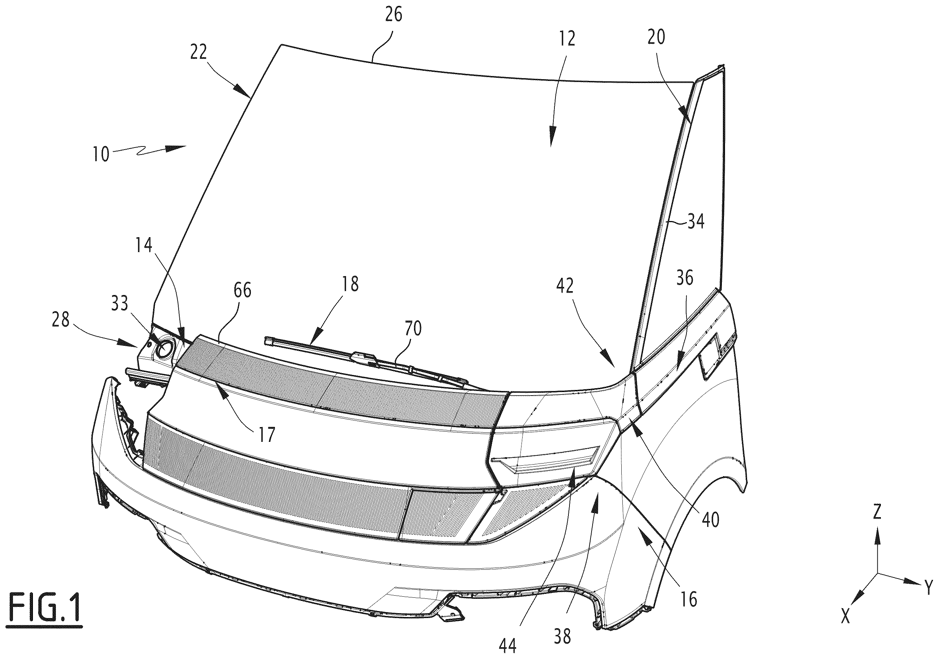

Les figures 1 à 3 montrent une structure avant 10 selon un mode de réalisation de l'invention. La structure avant 10 est notamment destinée à être intégrée à un véhicule automobile (non représenté).

La structure avant 10 comprend notamment : un pare-brise 12 ; un panneau d'auvent 14 ; et un premier agencement latéral 16. Dans le mode de réalisation représenté, la structure avant 10 comprend en outre une pièce centrale d'habillage 17 et au moins un premier essuie-glace 18.

Le pare-brise 12 est destiné à former une surface avant du véhicule selon une direction horizontale de déplacement dudit véhicule. Dans la suite de la description, les termes « avant » et « arrière » s'entendent par rapport à ladite direction de déplacement.

Dans la suite de la description, on considère une base orthonormée X, Y, Z, la direction X représentant la direction de déplacement du véhicule, la direction Z représentant la verticale.

Le pare-brise 12 s'étend dans la direction Y, dite direction transversale, entre une première 20 et une seconde 22 extrémités. Lesdites première 20 et seconde 22 extrémités sont sensiblement symétriques l'une de l'autre par rapport à un plan médian (X, Z) de la structure avant 10.

Selon la direction Z, le pare-brise 12 s'étend entre un bord inférieur 24 et un bord supérieur 26. De préférence, le pare-brise 12 est incliné d'un angle non nul par rapport à la verticale.

Le panneau d'auvent 14 s'étend selon la direction Y le long du bord inférieur 24 du pare-brise 12. Ledit panneau d'auvent 14 prolonge le pare-brise 12 vers le bas, formant sensiblement une surface continue avec ledit pare-brise 12.

Le panneau d'auvent 14 s'étend entre une première 27 et une seconde 28 extrémités selon la direction Y. Les première 27 et seconde 28 extrémités du panneau d'auvent 14 sont disposées au-dessous, respectivement, de la première 20 et de la seconde 22 extrémités du pare-brise 12.

A l'opposé du bord inférieur 24 du pare-brise 12, le panneau d'auvent 14 comporte une rigole 30, ouverte vers le haut et s'étendant selon la direction Y.

Par ailleurs, le panneau d'auvent 14 comporte au moins un premier orifice d'articulation 32, disposé proche de la première extrémité 27 dudit panneau. Le premier orifice d'articulation 32 est situé entre le pare-brise 12 et la rigole 30. De préférence, le panneau d'auvent 14 comporte un second orifice d'articulation 33 analogue, disposé proche de la seconde extrémité 28.

Le premier agencement latéral 16 sera décrit ultérieurement. De préférence, la structure avant 10 comprend en outre un second agencement latéral, non représenté. Dans la suite de la description, on considère que ledit second agencement latéral est symétrique du premier agencement latéral 16, par rapport au plan médian (X, Z) de la structure avant 10.

Le premier agencement latéral 16 comporte : un montant 34 ; une aile 36 ; un feu de jour 38 ; et une pièce d'habillage 40.

Le montant 34 est fixé à la première extrémité 20 du pare-brise 12 et s'étend sensiblement verticalement, entre une extrémité inférieure 42 et une extrémité supérieure.

L'aile 36 s'étend sensiblement vers l'arrière selon la direction X, depuis l'extrémité inférieure 42 du montant 34. De préférence, l'aile 36 forme une surface latérale externe du véhicule.

Le feu de jour 38 est sensiblement aligné selon X avec la première extrémité 27 du panneau d'auvent 14, ledit feu de jour étant disposé en avant par rapport audit panneau d'auvent.

Le feu de jour 38 comprend une façade 44, ladite façade comprenant un bord supérieur 46. Ledit bord supérieur s'étend sensiblement horizontalement. De préférence, le bord supérieur 46 de la façade 44 s'étend sensiblement dans la direction transversale Y.

Dans le mode de réalisation représenté, le feu de jour 38 comprend en outre un boîtier 48, assemblé à la façade 44 et situé en arrière de ladite façade.

Il est à noter que, dans le mode de réalisation représenté, le feu de jour 38 est beaucoup plus proche selon X du pare-brise 12 et du panneau d'auvent 14 que ne le sont les feux de signalisation de la plupart des véhicules automobiles connus.

La pièce d'habillage 40 comprend : un bord arrière 50 ; une portion frontale 52 ; une portion latérale 54 ; et une portion de protection 56.

Le bord arrière 50 de la pièce d'habillage 40 comprend une première 60 et une deuxième 62 parties, dans le prolongement l'une de l'autre. La première partie 60 du bord arrière s'étend sensiblement dans la direction transversale Y et est de préférence sensiblement rectiligne. La deuxième partie 62 présente une forme incurvée vers l'arrière selon la direction de déplacement X. La première partie 60 du bord arrière 50 est plus proche du plan médian (X, Z) du véhicule que la deuxième partie 62.

La portion frontale 52 de la pièce d'habillage 40 est sensiblement plane et s'étend dans la direction X, entre la première partie 60 du bord arrière 50 et le bord supérieur 46 de la façade 44 du feu de jour 38.

La portion latérale 54 de la pièce d'habillage 40 est formée d'une pièce avec la portion frontale. La portion latérale 54 est de forme incurvée, s'étendant depuis la deuxième partie 62 du bord arrière 50 et formant une surface continue avec l'aile 36.

La portion de protection 56 est formée d'une pièce avec la portion latérale 54 et inclinée par rapport à ladite portion latérale. Plus précisément, la portion de protection 56 s'étend sensiblement vers le bas à partir de la deuxième partie 62 du bord arrière. A l'opposé de ladite deuxième partie 62 du bord arrière, la portion de protection 56 comporte un bord libre 64, disposé en vis-à-vis du pare-brise 12.

De préférence, la portion de protection 56 forme une surface incurvée présentant une concavité orientée vers le bord supérieur 26 du pare-brise 12.

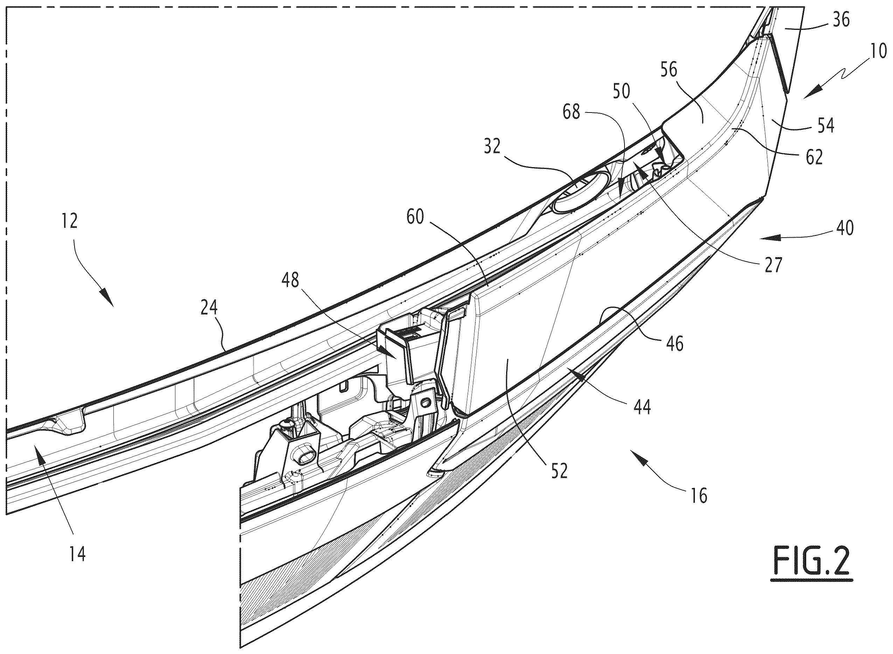

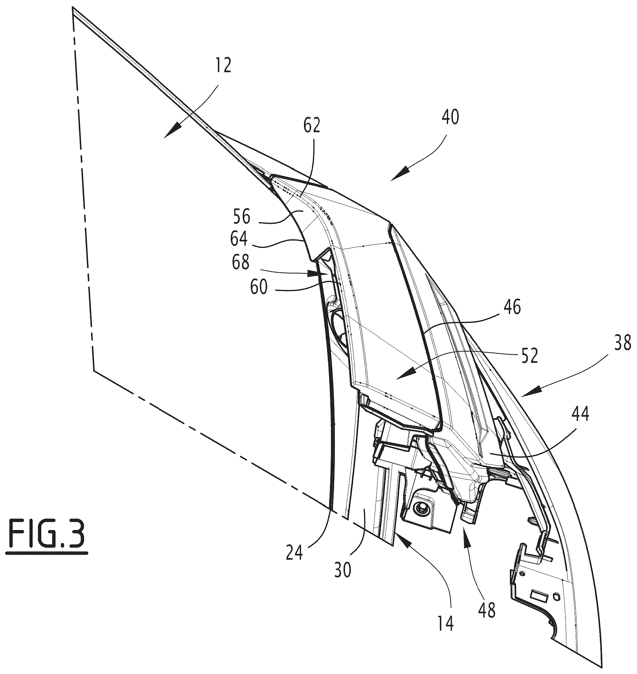

Dans le mode de réalisation représenté, la pièce centrale d'habillage 17 prolonge la portion frontale 52 de la pièce d'habillage 40 dans la direction Y, vers le plan médian (X, Z). Dans le mode de réalisation représenté, ledit plan médian forme un plan de symétrie de la pièce centrale d'habillage 17. La pièce centrale d'habillage 17 n'est pas visible sur les figures 2 et 3.

La pièce centrale d'habillage 17 comporte un bord supérieur 66, qui prolonge la première partie 60 du bord arrière 50 de la pièce d'habillage 40 dans la direction Y.

Dans le mode de réalisation représenté, la structure avant 10 comprend en outre une cavité avant 68, ouverte vers le haut. Selon la direction X, une extrémité arrière de la cavité avant 68 est formée par le pare-brise 12 et le panneau d'auvent 14 ; et une extrémité avant de ladite cavité avant 68 est formée par la pièce centrale d'habillage 17 et la pièce d'habillage 40 des premier 16 et second agencements latéraux.

Dans le mode de réalisation représenté, la première partie 60 du bord arrière 50 de la pièce d'habillage 40 est un bord libre, bordant la cavité avant 68. Plus précisément, la cavité avant 68 est ouverte au niveau de la première partie 60 du bord arrière 50 de la pièce d'habillage 40. Au contraire, la portion de protection 56 de la pièce d'habillage 40 ferme au moins partiellement la cavité avant 68 au niveau de la deuxième partie 62 du bord arrière 50 de la pièce d'habillage 40.

En d'autre termes, une première distance entre le pare-brise 12 et le bord libre 64 de la portion de protection 56 est inférieure à une deuxième distance entre le pare-brise 12 et la première partie 60 du bord arrière 50 de la pièce d'habillage 40.

Ainsi, la portion de protection 56 de la pièce d'habillage 40 dissimule au moins partiellement, depuis l'extérieur du véhicule, des éléments disposés dans la cavité avant 68.

Par exemple, le boîtier 48 du feu de jour 38 est disposé sous la pièce d'habillage 40, dans la cavité avant 68. En particulier, le boîtier 48 du feu de jour 38 est disposé sous la portion frontale 52 de la pièce d'habillage 40. La portion de protection 56 de la pièce d'habillage 40 dissimule partiellement ledit boîtier 48 depuis l'extérieur du véhicule.

Par ailleurs, dans le mode de réalisation représenté, le bord supérieur 66 de la pièce centrale d'habillage 17 est un bord libre, bordant la cavité avant 68. Plus précisément, la cavité avant 68 est ouverte au niveau du bord supérieur 66 de la pièce centrale d'habillage 17.

De préférence, comme dans le mode de réalisation représenté, le bord inférieur 24 du pare-brise 12 et le panneau d'auvent 14 sont disposés dans la cavité avant 68. En d'autres termes, la première partie 60 du bord arrière 50 de la pièce d'habillage 40 et le bord supérieur 66 de la pièce centrale d'habillage 17 sont situés plus haut selon Z que le bord inférieur 24 du pare-brise 12 et que le panneau d'auvent 14.

En particulier, la première extrémité 27 du panneau d'auvent 14 est disposée dans la cavité avant 68. Selon un mode de réalisation, un espace (non représenté) est ménagé selon Y entre ladite première extrémité 27 du panneau d'auvent 14 et l'aile 36 du premier agencement latéral 16. Ledit espace est au moins partiellement dissimulé par la portion de protection 56 de la pièce d'habillage 40 depuis l'extérieur du véhicule.

En conséquence, la rigole 30 du panneau d'auvent 14 est disposée dans la cavité avant 68. En particulier, la rigole 30 est apte à collecter de l'eau de pluie tombant dans la cavité avant 68 et/ou ruisselant sur le pare-brise 12.

De même, le premier orifice d'articulation 32 est disposé dans la cavité avant 68 de la structure avant 10.

Dans le mode de réalisation représenté, le premier essuie-glace 18 comprend un bras 70 et une articulation (non représentée) disposée à une extrémité dudit bras 70. L'articulation du premier essuie-glace 18 est assemblée au premier orifice d'articulation 32 du panneau d'auvent 14. Le bras 70 du premier essuie-glace 18 est mobile en rotation par rapport au panneau d'auvent 14. En particulier, le bras 70 est apte à émerger de la cavité avant 68, de sorte à balayer le pare-brise 12. L'articulation du premier essuie-glace 18 est partiellement dissimulée depuis l'extérieur du véhicule.

De préférence, le second orifice d'articulation 33 est disposé dans la cavité avant 68 ; et la structure avant 10 comprend en outre un second essuie-glace (non représenté), assemblé au second orifice d'articulation 33.

La structure avant 10 décrite ci-dessus est adaptée à une très faible distance entre le pare-brise 12 et les feux de jour 38. La pièce d'habillage 40 de chaque agencement latéral peut être fixée solidement au reste de la structure avant 10, notamment au feu de jour 38 correspondant. Une telle configuration améliore la solidité et la durée dans le temps de la structure avant 10.

## Revendications

1. Structure avant de véhicule automobile, comprenant :
- un pare-brise (12), destiné à former une surface avant du véhicule selon une direction de déplacement (X) dudit véhicule ;
le pare-brise s'étendant dans une direction transversale (Y) du véhicule, entre une première (20) et une seconde (22) extrémités ; le pare-brise s'étendant sensiblement verticalement entre un bord inférieur (24) et un bord supérieur (26) ;
- un panneau d'auvent (14), s'étendant selon la direction transversale le long du bord inférieur (24) du pare-brise, entre une première (27) et une seconde (28) extrémités ; et
- un premier agencement latéral (16) ;
le premier agencement latéral comportant :
- un montant (34), fixé à la première extrémité (20) du pare-brise et s'étendant sensiblement verticalement, entre une extrémité inférieure (42) et une extrémité supérieure ;
- une aile (36), s'étendant sensiblement vers l'arrière selon la direction de déplacement, depuis l'extrémité inférieure (42) du montant ; et
- un feu de jour (38), sensiblement aligné selon la direction de déplacement avec la première extrémité (27) du panneau d'auvent (14), ledit feu de jour étant disposé en avant par rapport audit panneau d'auvent ; le feu de jour comprenant une façade (44), ladite façade comprenant un bord supérieur (46) s'étendant sensiblement horizontalement ;
la structure avant de véhicule étant **caractérisée en ce que** le premier agencement latéral comporte en outre une pièce d'habillage (40), ladite pièce d'habillage comprenant :
- un bord arrière (50), comprenant une première (60) et une deuxième (62) parties dans le prolongement l'une de l'autre ; la deuxième partie présentant une forme incurvée ;
- une portion frontale (52), sensiblement plane, s'étendant dans la direction de déplacement depuis la première partie (60) du bord arrière jusqu'au bord supérieur (46) de la façade (44) du feu de jour ;
- une portion latérale (54), formée d'une pièce avec la portion frontale (52) ; ladite portion latérale étant de forme incurvée, s'étendant depuis la deuxième partie (62) du bord arrière (50) et formant une surface continue avec l'aile (36) ; et
- une portion de protection (56), formée d'une pièce avec la portion latérale (54) et inclinée par rapport à ladite portion latérale, ladite portion de protection s'étendant sensiblement vers le bas à partir de la deuxième partie (62) du bord arrière, jusqu'à un bord libre (64) disposé en vis-à-vis du pare-brise (12).

2. Structure avant selon la revendication 1, dans laquelle la portion de protection (56) forme une surface incurvée présentant une concavité orientée vers le bord supérieur (26) du pare-brise (12).

3. Structure avant selon la revendication 1 ou 2, dans laquelle une première distance entre le pare-brise (12) et le bord libre (64) de la portion de protection (56) est inférieure à une deuxième distance entre le pare-brise (12) et la première partie (60) du bord arrière (50) de la pièce d'habillage (40).

4. Structure avant selon l'une des revendications précédentes, comprenant une cavité avant (68), ménagée entre le pare-brise (12) et le panneau d'auvent (14) d'une part, et la pièce d'habillage (40) du premier agencement latéral (16) d'autre part ; et la première partie (60) du bord arrière (50) de la pièce d'habillage est un bord libre, bordant ladite cavité avant.

5. Structure avant selon la revendication 4, dans laquelle le feu de jour (38) du premier agencement latéral (16) comporte un boîtier (48) fixé à la façade (44) et disposé en arrière de ladite façade, ledit boîtier étant disposé sous la portion frontale (52) de la pièce d'habillage (40) et dans la cavité avant (68).

6. Structure avant selon la revendication 4 ou 5, dans laquelle : le panneau d'auvent (14) comprend un premier orifice d'articulation (32), disposé proche de la première extrémité (27) dudit panneau d'auvent ; le premier orifice d'articulation (32) est disposé dans la cavité avant (68) ; et la structure avant comprend en outre un essuie-glace (18), assemblé au premier orifice d'articulation (32).

7. Structure avant selon l'une des revendications 4 à 6, comprenant en outre une pièce centrale d'habillage (17), prolongeant la pièce d'habillage (40) du premier agencement latéral (16) dans la direction transversale (Y), la cavité avant (68) s'étendant également entre le pare-brise (12) et le panneau d'auvent (14) d'une part, et la pièce centrale d'habillage (17) d'autre part.

8. Structure avant selon l'une des revendications 4 à 7, dans laquelle le panneau d'auvent (14) comprend une rigole (30), disposée dans la cavité avant (68), ouverte vers le haut et s'étendant dans la direction transversale (Y).

9. Structure avant (10) selon l'une des revendications précédentes, comprenant en outre un second agencement latéral, sensiblement symétrique du premier agencement latéral (16) par rapport à un plan médian de la structure avant.

10. Véhicule automobile, comprenant une structure avant (10) selon l'une des revendications précédentes.
